# EUROPÄISCHE PATENTSCHRIFT

(11) **EP 4 004 407 B1**
(45) Veröffentlichungstag und Bekanntmachung des Hinweises auf die Patenterteilung: **27.03.2024**
(21) Anmeldenummer: 20757225.6
(22) Anmeldetag: 30.07.2020
(51) Int. Cl.: F16H 55/14, F16H 55/18

(54) **ZAHNRAD**
TOOTH WHEEL
ROUE DENTÉE

(30) Priorität: 31.07.2019 DE 102019211451
(43) Veröffentlichungstag der Anmeldung: 01.06.2022
(73) Patentinhaber: Rolls-Royce Deutschland Ltd & Co KG, 15827 Blankenfelde-Mahlow (DE)
(72) Erfinder: CHAO, Chen-Xiang, 15827 Blankenfelde-Mahlow (DE); KRÜGER, David, 15827 Blankenfelde-Mahlow (DE); NIQUE, Michael, 15827 Blankenfelde-Mahlow (DE)
(86) Internationale Anmeldenummer: PCT/EP2020/071544
(87) Internationale Veröffentlichungsnummer: WO 2021/019030

(56) Entgegenhaltungen:
- EP-A2- 1 245 869
- EP-A2- 1 245 869
- CN-U- 205 036 822
- DE-A1-102012 102 776
- JP-B2- 3 484 797
- US-A1- 2002 043 124
- US-A1- 2015 047 448
- US-A1- 2017 108 110

## Beschreibung

Die vorliegende Offenbarung bezieht sich auf ein Zahnrad für ein Getriebe, auf ein Getriebe und auf ein Gasturbinentriebwerk.

US 2015/047448 A1 beschreibt ein Zahnrad, das einen inneren Ringabschnitt, einen äußeren Ringabschnitt und eine Anzahl von Speichen umfasst, die den inneren Ringabschnitt mit dem äußeren Ringabschnitt verbinden, wobei eine Außenumfangsfläche des Außenringabschnitts mit Zähnen versehen ist und jede Speiche einen kurvenförmigen Hauptabschnitt, einen inneren Endabschnitt an einem inneren Ende des Hauptabschnitts, der mit dem inneren Ringabschnitt verbunden ist, und einen äußeren Endabschnitt an einem äußeren Ende des Hauptabschnitts, der mit dem äußeren Ringabschnitt verbunden ist, umfasst.

DE 10 2012 102776 A1 offenbart ein Schraubrad für eine elektromechanische Lenkvorrichtung und ein Schraubgetriebe mit einem solchen Schraubrad, wobei das Schraubrad ein Innenteil, ein Verbindungsteil und ein Außenteil mit Zähnen umfasst, wobei unter jedem Zahn des Außenteils jeweils eine Verstärkung ausgebildet ist. Zahnräder können in Form von Stegzahnrädern, oder kurz: Stegrädern, oder in Form von Vollrädern hergestellt werden. Bei Stegrädern sitzt eine umlaufende Verzahnung auf einem Kranz, der über einen Steg mit einer Abstützstelle, insbesondere einer Nabe, verbunden ist. Der Kranz weist für gewöhnlich eine kreiszylindrische Innenseite auf. Im Vergleich zum Kranz und zur Verzahnung weist der Steg in axialer Richtung in Bezug auf die Drehachse des Zahnrads eine geringere Dicke (Breite) auf. Hierdurch kann Material eingespart werden, sodass das Gewicht des Zahnrads reduziert werden kann. Der Steg hat z.B. die Form einer Scheibe und kann ein Drehmoment zwischen dem Kranz und der Nabe übertragen. Auf einer oder beiden Seiten neben dem Steg ist somit ein durch den Kranz umschlossener Raum z.B. in Form einer Vertiefung oder Tasche ausgebildet. Vollräder weisen zwischen der Verzahnung und der Nabe keinen dünneren Abschnitt auf, sodass kein Steg und kein danebenliegender Raum ausgebildet ist.

Ein Stegrad ist im Vergleich zu einem Vollrad in der Regel leichter aber typischerweise weniger stark belastbar.

Aufgabe der vorliegenden Erfindung ist es, ein möglichst leichtes und gleichzeitig möglichst stark belastbares Zahnrad bereitzustellen.

Gemäß einem Aspekt wird ein Zahnrad für ein Getriebe bereitgestellt. Das Zahnrad umfasst einen Kranz, an dem eine (umlaufende) Verzahnung mit einer Vielzahl von Zähnen vorgesehen ist, sowie eine Abstützstelle (insbesondere in Form einer Lagerstelle und/oder Nabe). An der Abstützstelle ist das Zahnrad drehbar oder drehfest an einer anderen Komponente montierbar. Die Abstützstelle und der Kranz sind über einen Steg (insbesondere genau einen Steg) fest miteinander verbunden. Der Steg weist in Axialrichtung eine geringere Dicke auf als der Kranz und/oder die Verzahnung, optional auch eine geringere Dicke als die Abstützstelle. An einer der Verzahnung gegenüberliegenden Seite des Kranzes (z.B. dessen Innenseite, insbesondere innere Oberfläche) ist dabei eine in Axialrichtung neben dem Steg angeordnete Variation der Geometrie vorgesehen, eine periodische und (z.B. in Umfangsrichtung betrachtet) an die Zähne der Verzahnung ausgerichtete (räumliche) Variation der Geometrie (des Zahnrads, insbesondere des Kranzes, insbesondere einer Oberfläche davon).

Das basiert auf der Erkenntnis, dass bei einer Benutzung von Zahnrädern insbesondere jeweils ein bestimmter Bereich an jedem der Zähne der Verzahnung besonders stark belastet wird, z.B. ein Zahnfußbereich oder ein bestimmter Bereich einer Zahnflanke. Insbesondere durch eine Optimierung der Zahnfußkurve kann eine Beanspruchung im Zahngrundbereich erhöht sein. Die optimale Form der Zahnfußkurve ist in der Regel unter anderem abhängig von der Steifigkeit des darunterliegenden Kranzes. Die direkt über dem Kranz liegenden abwechselnden Bereiche mit einer Zahnlücke oder einem Zahn, sowie der Abstand zum Steg führen üblicherweise regelmäßig zu einer nicht konstanten Steifigkeit des Zahnradkörpers in axialer Richtung und Umfangsrichtung. Diese Steifigkeitsschwankungen können durch die auf die Zähne ausgerichtete Variation der Geometrie ausgeglichen werden. Indem eine Variation der Geometrie vorgesehen wird, die auf die Zähne hin ausgerichtet ist, kann jeweils für einen besonders stark beanspruchten Bereich jedes Zahns eine Verstärkung ausgebildet werden, während in den übrigen Abschnitten des Kranzes im Vergleich dazu Material eingespart werden kann. Hierdurch kann ein besonders leichtes Zahnrad ausgebildet werden, das zugleich besonders stark belastbar ist.

An der Abstützstelle kann das Zahnrad über ein Lager gelagert sein. Die Abstützstelle kann eine Nabe einer Welle-Nabe-Verbindung sein.

Durch die Variation weicht die Geometrie des Zahnrads, insbesondere des Kranzes, an der der Verzahnung (lokal) abgewandten Seite von einem Kreis, insbesondere von einem Kreiszylinder ab. In Umfangsrichtung variiert die Geometrie des Zahnrads, insbesondere des Kranzes (z.B. ein innerer Radius), an der der Verzahnung gegenüberliegenden Seite. Beispielsweise weist der Kranz an unterschiedlichen Stellen in Umfangsrichtung verschiedene Innenradien auf. Beispielsweise weist der Kranz an seiner der Verzahnung abgewandten Seite ein Muster auf, welches auf die Zähne der Verzahnung ausgerichtet ist. Die Verzahnung ist beispielsweise an der Außenseite des Kranzes vorgesehen, die der Verzahnung gegenüberliegende Seite ist dann die Innenseite des Kranzes.

Bei der Verzahnung kann es sich um eine Geradverzahnung, eine Schrägverzahnung, eine symmetrische Verzahnung oder eine asymmetrische Verzahnung handeln.

Ferner kann es sich bei der Verzahnung um eine Einfachschrägverzahnung oder um eine Doppelschrägverzahnung handeln.

Der Steg weist z.B. die Form einer Scheibe auf und kann flächig, insbesondere durchgehend ausgebildet sein. Der Steg kann mittig oder einseitig zu einer Seite des Zahnrads hin angeordnet sein. Die der Verzahnung gegenüberliegende Seite ist z.B. der Abstützstelle zugewandt. Die der Verzahnung gegenüberliegende Seite bildet z.B. eine innere Oberfläche des Kranzes aus. An die innere Oberfläche des Kranzes grenzt beispielsweise eine Ausnehmung an, welche sich (z.B. ohne Unterbrechung) um die Drehachse des Zahnrads herum und/oder von der Innenseite des Kranzes bis zur Abstützstelle erstreckt.

Das Zahnrad weist eine Drehachse auf. Optional variiert ein Radius bezüglich der Drehachse zu einer inneren Oberfläche des Kranzes in Umfangsrichtung um die Drehachse, wodurch die Variation der Geometrie erzielt wird. Damit sind bestimmte Bereiche des Kranzes (unterhalb der Verzahnung) in radialer Richtung dicker als andere.

Erfindungsgemäß variiert der Radius bezüglich der Drehachse zu einer inneren Oberfläche des Kranzes in axialer Richtung bezüglich der Drehachse.

Hierdurch kann eine in axialer Richtung sonst veränderliche Steifigkeit ausgeglichen werden. In der Folge kann eine für den jeweiligen Anwendungsfall optimierte Zahnform, insbesondere Zahnfußkurve in axialer Richtung gleichbleibend vorgesehen werden. Dadurch ist es möglich, an jeder axialen Position eine besonders hohe Zahnfußtragfähigkeit zu erzielen.

Der Kranz kann links und rechts des Stegs jeweils eine Kranzgeometrie aufweisen, wobei die Kranzgeometrie links des Stegs und die Kranzgeometrie rechts des Stegs optional unterschiedlich ausgebildet sind. Alternativ dazu sind die beiden Kranzgeometrien gleich ausgebildet. Beispielsweise sind die beiden Kranzgeometrien spiegelbildlich ausgebildet. Alternativ geht der Kranz auf einer der beiden Seiten bündig in den Steg über.

Die periodische Variation der Geometrie umfasst z.B. gleichviele Perioden wie die Verzahnung Zähne. Zur Bildung der Variation der Geometrie kann eine Vielzahl periodisch angeordneter und (z.B. nach innen) vorstehender Bereiche ausgebildet sein, insbesondere in einer Zahl, die der Anzahl an Zähnen der Verzahnung gleicht. Die gegenüber benachbarten Bereichen (z.B. nach innen) vorstehenden Bereiche sind z.B. jeweils als zur Abstützstelle beabstandeter Vorsprung ausgebildet oder verbinden alternativ den Kranz mit der Abstützstelle. Jeder der (nach innen) vorstehenden Bereiche dient als Versteifung für einen oder zwei darüberliegende(n) Zahn/Zähne. Gemäß einer Alternative erstrecken sich die nach innen vorstehenden Bereiche in Umfangsrichtung gesehen über mehrere Zähne und/oder Zahnlücken der Verzahnung hinweg, z.B. über jeweils zwei oder drei Zähne und/oder Zahnlücken. Die Anzahl der Zähne und/oder der Zahnlücken der Verzahnung kann gleich oder verschieden sein von der Anzahl der nach innen vorstehenden Bereiche, z.B. ein ganzzahliges Vielfaches der Anzahl der nach innen vorstehenden Bereiche.

Alternativ oder zusätzlich kann zur Bildung der Variation der Geometrie jeweils unter einer Zahnlücke zwischen zwei benachbarten Zähnen (oder unter mehreren benachbarten Zahnlücken) ein vom Kranz nach innen vorstehender Bereich ausgebildet sein. Bei vielen Anwendungen ist insbesondere der Zahnfußbereich besonders stark belastet. Durch einen nach innen vorstehenden Bereich unter jeder der Zahnlücken können die Zahnfußbereiche verstärkt werden und damit belastbarer gemacht werden. Ferner ist es hierdurch auch möglich, die Form der Zahnfüße noch besser an die jeweilige Anwendung anzupassen.

Jeweils zwei benachbarte, (z.B. nach innen) vorstehende Bereiche weisen z.B. denselben Winkelabstand zueinander auf wie die beiden nächstgelegenen und/oder darüberliegenden Zähne und/oder Zahnlücken. Beispielsweise weist die auf die Zähne der Verzahnung ausgerichtete Variation der Geometrie dieselbe Periodizität auf, wie die Verzahnung. Dabei können die nach innen vorstehenden Bereiche beispielsweise jeweils symmetrisch zu den Zahnlücken oder asymmetrisch zu den Zahnlücken (z.B. bei asymmetrischen Verzahnungen oder einseitig belasteten Zahnrädern) ausgerichtet sein. In beiden Fällen ist jede Periode der Geometrievariation an die räumliche Lage eines Zahns der Verzahnung gekoppelt und auf diesem Weg daran ausgerichtet.

Das Zahnrad ist optional einstückig ausgebildet, insbesondere materialeinheitlich. Die Variation der Geometrie wird z.B. bei einem Urformen des Zahnrades und/oder bei einer zerspanenden Bearbeitung des Zahnrades hergestellt.

Gemäß einem Aspekt wird ein Zahnrad für ein Getriebe bereitgestellt, umfassend: einen Kranz, an dem eine umlaufende Verzahnung mit einer Vielzahl von Zähnen vorgesehen ist, eine Abstützstelle (insbesondere in Form einer Lagerstelle und/oder Nabe) und einen Steg, über den der Kranz mit der Abstützstelle verbunden ist. Dabei ist an einer der Verzahnung gegenüberliegenden Seite des Kranzes eine Variation des Materials vorgesehen, um eine Erhöhung einer Steifigkeit des Kranzes zu erzielen. Konkret kann dabei dort ein Material mit einer im Vergleich zum Material des Kranzes vergleichbaren oder höheren spezifischen Steifigkeit angeordnet sein. Von einer vergleichbaren spezifischen Steifigketit wird z.B. ausgegangen, wenn die spezifische Steifigkeit des an der der Verzahnung gegenüberliegenden Seite des Kranzes vorgesehenen Materials im Bereich von der spezifischen Steifigkeit des Materials des Kranzes +/-15%, insbesondere +/- 10%, insbesondere +/- 5% liegt. Alternativ dazu beträgt sie mindestens 5% mehr (oder mindestens 10% mehr, insbesondere mindestens 15% mehr) als die spezifische Steifigkeit des Materials des Kranzes. Beispielsweise beträgt die spezifische Steifigkeit des an der der Verzahnung gegenüberliegenden Seite des Kranzes vorgesehenen Materials mindestens 85%, insbesondere mindestens 90%, insbesondere mindestens 95%, insbesondere mindestens 100% der spezifschen Steifigkeit des Materials des Kranzes. Auch hierdurch ist ein besonders leichtes und gleichzeitig stark belastbares Zahnrad möglich. Optional wird das Zahnrad zusätzlich mit einer an die Zähne der Verzahnung ausgerichteten Variation der Geometrie gemäß dem vorstehend beschriebenen Zahnrad ausgebildet und/oder mit einer an die Zähne der Verzahnung ausgerichteten Materialbeschaffenheit. Optional weist das an der der Verzahnung gegenüberliegenden Seite des Kranzes vorgesehene Material eine spezifische Steifigkeit größer als 20e6 m²/s² auf, insbesondere von (etwa) 26e6 m²/s² (oder mehr).

Beispielsweise ist in den Kranz ein Ring aus einem Material mit einer im Vergleich zum Material des Kranzes höheren spezifischen Steifigkeit eingesetzt. Hierdurch kann der Kranz besonders effektiv verstärkt werden.

Der Kranz kann einen Stahl umfassen oder daraus bestehen. Alternativ oder zusätzlich umfasst der Ring einen kohlenstofffaserverstärkten Kunststoff oder besteht daraus. Alternativ oder zusätzlich umfasst der Ring Stahl und/oder Keramik und/oder eine oder mehrere Titanlegierung(en) oder besteht alternativ aus einem oder mehreren dieser Materialien. Optional umfasst der Kranz einen Stahl oder besteht daraus und das an der der Verzahnung gegenüberliegenden Seite des Kranzes vorgesehene Material (z.B. in Form des Rings) ist ein von dem Stahl verschiedenes Material mit einer ähnlichen und/oder höheren spezifischen Steifigkeit.

Das Zahnrad ist optional für ein Getriebe zum Antrieb eines Fans eines Gasturbinentriebwerks mit einer niedrigeren Drehzahl als eine Kernwelle des Gasturbinentriebwerks ausgebildet, sodass es den im Betrieb des Fans des Gasturbinentriebwerks auftretenden Belastungen standhält.

Demnach wird gemäß einem Aspekt ein Zahnrad für ein Getriebe bereitgestellt, wie im Anspruch 1 beschreiben.

Gemäß einem Aspekt wird ein Getriebe bereitgestellt, optional zum Antrieb eines Fans eines Gasturbinentriebwerks mit einer niedrigeren Drehzahl als eine Kernwelle des Gasturbinentriebwerks. Das Getriebe umfasst ein Zahnrad, das einen Kranz, an dem eine Verzahnung mit einer Vielzahl von Zähnen vorgesehen ist, eine Abstützstelle und einen Steg, über den der Kranz mit der Abstützstelle verbunden ist, umfasst. Dabei ist an einer der Verzahnung gegenüberliegenden Seite des Kranzes (z.B. in axialer Richtung und/oder in Umfangsrichtung) neben dem Steg eine (z.B. periodische, insbesondere an die Zähne ausgerichtete) Variation der Geometrie und/oder des Materials vorgesehen.

Dabei kann das Zahnrad nach einer beliebigen, hierin beschriebenen Ausgestaltung ausgebildet sein.

Gemäß einem Aspekt wird ein Gasturbinentriebwerk für ein Luftfahrzeug bereitgestellt, das Folgendes umfasst: ein Kerntriebwerk, das eine Turbine, einen Verdichter und eine die Turbine mit dem Verdichter verbindende Kernwelle umfasst; einen Fan, der stromaufwärts des Kerntriebwerks positioniert ist, wobei der Fan mehrere Fanschaufeln umfasst; und ein Getriebe, das von der Kernwelle antreibbar ist, wobei der Fan mittels des Getriebes mit einer niedrigeren Drehzahl als die Kernwelle antreibbar ist. Dabei ist vorgesehen, dass das Getriebe nach einer beliebigen, hierin beschriebenen Ausgestaltung ausgebildet ist und/oder ein Zahnrad nach einer beliebigen, hierin beschriebenen Ausgestaltung umfasst.

Optional sind die Turbine eine erste Turbine, der Verdichter ein erster Verdichter und die Kernwelle eine erste Kernwelle, wobei das Kerntriebwerk ferner eine zweite Turbine, einen zweiten Verdichter und eine zweite Kernwelle, die die zweite Turbine mit dem zweiten Verdichter verbindet, umfasst. Die zweite Turbine, der zweite Verdichter und die zweite Kernwelle können dahingehend angeordnet sein, sich mit einer höheren Drehzahl als die erste Kernwelle zu drehen.

Wie hier an anderer Stelle angeführt wird, kann sich die vorliegende Offenbarung auf ein Gasturbinentriebwerk, z.B. ein Flugzeugtriebwerk, beziehen. Solch ein Gasturbinentriebwerk kann ein Kerntriebwerk umfassen, das eine Turbine, eine Brennervorrichtung, einen Verdichter und eine die Turbine mit dem Verdichter verbindende Kernwelle umfasst. Solch ein Gasturbinentriebwerk kann einen Fan (mit Fanschaufeln) umfassen, der stromaufwärts des Kerntriebwerks positioniert ist.

Anordnungen der vorliegenden Offenbarung können insbesondere, jedoch nicht ausschließlich, für Getriebe-Fans, die über ein Getriebe angetrieben werden, von Vorteil sein. Entsprechend kann das Gasturbinentriebwerk ein Getriebe umfassen, das über die Kernwelle angetrieben wird und dessen Abtrieb den Fan so antreibt, dass er eine niedrigere Drehzahl als die Kernwelle aufweist. Der Eingang für das Getriebe kann direkt von der Kernwelle oder indirekt über die Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich der Fan mit einer niedrigeren Drehzahl dreht).

Das Gasturbinentriebwerk, das hier beschrieben und/oder beansprucht wird, kann eine beliebige geeignete allgemeine Architektur aufweisen. Beispielsweise kann das Gasturbinentriebwerk eine beliebige gewünschte Anzahl an Wellen aufweisen, die Turbinen und Verdichter verbinden, beispielsweise eine, zwei oder drei Wellen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Das Kerntriebwerk kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei einer solchen Anordnung kann der zweite Verdichter axial stromabwärts des ersten Verdichters positioniert sein. Der zweite Verdichter kann dahingehend angeordnet sein, eine Strömung von dem ersten Verdichter aufzunehmen (beispielsweise direkt aufzunehmen, beispielsweise über einen generell ringförmigen Kanal).

Das Getriebe kann dahingehend ausgebildet sein, dass es von der Kernwelle angetrieben wird, die dazu konfiguriert ist, sich (beispielsweise im Gebrauch) mit der niedrigsten Drehzahl zu drehen (beispielsweise die erste Kernwelle in dem obigen Beispiel). Beispielsweise kann das Getriebe dahingehend ausgebildet sein, dass es lediglich von der Kernwelle angetrieben wird, die dazu konfiguriert ist, sich (beispielsweise im Gebrauch) mit der niedrigsten Drehzahl zu drehen (beispielsweise nur von der ersten Kernwelle und nicht der zweiten Kernwelle bei dem obigen Beispiel). Alternativ dazu kann das Getriebe dahingehend ausgebildet sein, dass es von einer oder mehreren Wellen angetrieben wird, beispielsweise der ersten und/oder der zweiten Welle in dem obigen Beispiel.

Bei einem Gasturbinentriebwerk, das hier beschrieben und/oder beansprucht wird, kann eine Brennvorrichtung axial stromabwärts des Fans und des Verdichters (oder der Verdichter) vorgesehen sein. Beispielsweise kann die Brennervorrichtung direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Die Brennervorrichtung kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen, bei denen es sich um variable Statorschaufeln handeln kann (d.h. der Anstellwinkel kann variabel sein). Die Reihe von Rotorschaufeln und die Reihe von Statorschaufeln können axial zueinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial zueinander versetzt sein.

Jede Fanschaufel kann eine radiale Spannweite aufweisen, die sich von einem Fuß (oder einer Nabe) an einer radial innenliegenden, von Gas überströmten Stelle oder sich von einer Position einer Spannweite von 0 % zu einer Spitze mit einer Spannweite von 100 % erstreckt. Das Verhältnis des Radius der Fanschaufel an der Nabe zu dem Radius der Fanschaufel an der Spitze kann bei weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Fanschaufel an der Nabe zu dem Radius der Fanschaufel an der Spitze kann in einem abgeschlossenen Bereich liegen, der von zwei Werten im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an der vorderen Kante (oder der axial am weitesten vorne liegenden Kante) der Schaufel gemessen werden. Das Nabe-Spitze-Verhältnis bezieht sich natürlich auf den von Gas überströmten Abschnitt der Fanschaufel, d. h. den Abschnitt, der sich radial außerhalb jeglicher Plattform befindet.

Der Radius des Fans kann zwischen der Mittellinie des Triebwerks und der Spitze der Fanschaufel an ihrer vorderen Kante gemessen werden. Der Durchmesser des Fans (der allgemein das Doppelte des Radius des Fans sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Fandurchmesser kann in einem abgeschlossenen Bereich liegen, der von zwei der Werte im vorhergehenden Satz begrenzt wird (d. h. die Werte können obere oder untere Grenzen bilden).

Die Drehzahl des Fans kann im Betrieb variieren. Allgemein ist die Drehzahl geringer für Fans mit einem größeren Durchmesser. Lediglich als ein nicht einschränkendes Beispiel kann die Drehzahl des Fans bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Fans bei Konstantgeschwindigkeitsbedingungen für ein Triebwerk mit einem Fandurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Fans bei Konstantgeschwindigkeitsbedingungen für ein Triebwerk mit einem Fandurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich der Fan (mit zugehörigen Fanschaufeln) um eine Drehachse. Diese Drehung führt dazu, dass sich die Spitze der Fanschaufel mit einer Geschwindigkeit U_{Spitze} bewegt. Die von den Fanschaufeln an der Strömung verrichtete Arbeit resultiert in einem Anstieg der Enthalpie dH der Strömung. Eine Fanspitzenbelastung kann als dH/U_{Spitze}² definiert werden, wobei dH der Enthalpieanstieg (beispielsweise der durchschnittliche 1-D-Enthalpieanstieg) über den Fan hinweg ist und U_{Spitze} die (Translations-) Geschwindigkeit der Fanspitze, beispielsweise an der vorderen Kante der Spitze, ist (die als Fanspitzenradius am vorderen Rand multipliziert mit der Winkelgeschwindigkeit definiert werden kann). Die Fanspitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Fanspitzenbelastung kann in einem abgeschlossenen Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (oder in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem abgeschlossenen Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Kerntriebwerks befinden. Die radial äußere Fläche des Bypasskanals kann durch eine Triebwerksgondel und/oder ein Fangehäuse definiert werden.

Das Gesamtdruckverhältnis eines Gasturbinentriebwerks, das hier beschrieben und/oder beansprucht wird, kann als das Verhältnis des Staudrucks stromaufwärts des Fans zu dem Staudruck am Ausgang des Höchstdruckverdichters (vor dem Eingang in die Brennervorrichtung) definiert werden. Als ein nicht einschränkendes Beispiel kann das Gesamtdruckverhältnis eines Gasturbinentriebwerks, das hier beschrieben und/oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem abgeschlossenen Bereich liegen, der von zwei der Werte im vorhergehenden Satz begrenzt wird (d. h. die Werte können obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 N kg⁻¹s, 105 Nkg⁻¹s, 100 Nkg⁻¹s, 95 Nkg⁻¹s, 90 Nkg⁻¹s, 85 Nkg⁻¹s oder 80 Nkg⁻¹s betragen (liegen). Der spezifische Schub kann in einem abgeschlossenen Bereich liegen, der von zwei der Werte im vorhergehenden Satz begrenzt wird (d. h. die Werte können obere oder untere Grenzen bilden). Solche Triebwerke können im Vergleich zu herkömmlichen Gasturbinentriebwerken besonders effizient sein.

Ein Gasturbinentriebwerk, das hier beschrieben und/oder beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160 kN, 170 kN, 180 kN, 190 kN, 200 kN, 250 kN, 300 kN, 350 kN, 400 kN, 450 kN, 500 kN oder 550kN in der Lage sein. Der Höchstschub kann in einem abgeschlossenen Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 °C (Umgebungsdruck 101,3 kPa, Temperatur 30 °C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zur Brennvorrichtung, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400 K, 1450 K, 1500 K, 1550 K, 1600 K oder 1650 K betragen (liegen). Die TET bei Konstantgeschwindigkeit kann in einem abgeschlossenen Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700 K, 1750 K, 1800 K, 1850 K, 1900 K, 1950 K oder 2000 K betragen (liegen). Die maximale TET kann in einem abgeschlossenen Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Fanschaufel und/oder ein Blattabschnitt (aerofoil) einer Fanschaufel, die hier beschrieben und/oder beansprucht wird, kann aus einem beliebigen geeigneten Material oder einer Kombination aus Materialien hergestellt werden. Beispielsweise kann zumindest ein Teil der Fanschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Fanschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Fanschaufel kann mindestens zwei Bereiche umfassen, die unter Verwendung verschiedener Materialien hergestellt werden. Beispielsweise kann die Fanschaufel eine vordere Schutzkante aufweisen, die unter Verwendung eines Materials hergestellt wird, das dem Aufschlagen (beispielsweise von Vögeln, Eis oder anderem Material) besser widerstehen kann als der Rest der Schaufel. Solch eine vordere Kante kann beispielsweise unter Verwendung von Titan oder einer auf Titan basierenden Legierung hergestellt werden. Somit kann die Fanschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Fan, der hier beschrieben und/oder beansprucht wird, kann einen mittleren Abschnitt umfassen, von dem sich die Fanschaufeln, beispielsweise in einer radialen Richtung, erstrecken können. Die Fanschaufeln können auf beliebige gewünschte Art und Weise an dem mittleren Abschnitt angebracht sein. Beispielsweise kann jede Fanschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Fanschaufel an der Nabe/Scheibe in einen entsprechenden Schlitz in der Nabe/Scheibe eingesteckt und/oder damit in Eingriff gebracht werden kann. Als ein weiteres Beispiel können die Fanschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Fanschaufeln aus einem Block maschinell herausgearbeitet werden und/oder mindestens ein Teil der Fanschaufeln kann durch Schweißen, wie z. B. lineares Reibschweißen, an der Nabe/Scheibe angebracht werden.

Die Gasturbinentriebwerke, die hier beschrieben und/oder beansprucht werden, können oder können nicht mit einer VAN (Variable Area Nozzle - Düse mit variablem Querschnitt) versehen sein. Solch eine Düse mit variablem Querschnitt kann im Betrieb eine Variation des Ausgangsquerschnitts des Bypasskanals erlauben. Die allgemeinen Prinzipien der vorliegenden Offenbarung können auf Triebwerke mit oder ohne eine VAN zutreffen.

Der Fan einer Gasturbine, die hier beschrieben und/oder beansprucht wird, kann eine beliebige gewünschte Anzahl an Fanschaufeln, beispielsweise 16, 18, 20 oder 22 Fanschaufeln, aufweisen.

Gemäß der hier erfolgenden Verwendung können Konstantgeschwindigkeitsbedingungen die Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Triebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantgeschwindigkeitsbedingung sein. Bei einigen Luftfahrzeugen können die Konstantgeschwindigkeitsbedingung außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe entsprechen, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 °C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Fanbetrieb ausgelegt ist, entsprechen. Dies kann beispielsweise die Bedingungen, bei denen der Fan (oder das Gasturbinentriebwerk) konstruktionsgemäß den optimalen Wirkungsgrad aufweist, bedeuten.

Im Betrieb kann ein Gasturbinentriebwerk, das hier beschrieben und/oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise zwei oder vier) Gasturbinentriebwerk(e) zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Es werden nun beispielhaft Ausführungsformen mit Bezug auf die Figuren beschrieben; in den Figuren zeigen:
- Figur 1: ein Luftfahrzeug in Form eines Flugzeugs mit mehreren Gasturbinentriebwerken;
- Figur 2: eine Seitenschnittansicht eines Gasturbinentriebwerks;
- Figur 3: eine Seitenschnittgroßansicht eines stromaufwärtigen Abschnitts eines Gasturbinentriebwerks;
- Figur 4: eine zum Teil weggeschnittene Ansicht eines Getriebes für ein Gasturbinentriebwerk;
- Figur 5: eine Ansicht eines nicht erfindungsgemäßen Zahnrads in Form eines Stegrads:
- Figuren 6 bis 9: jeweils eine zum Teil weggeschnittene Ansicht jeweils eines Zahnrads in Form eines Stegrads;
- Figuren 10 und 11: jeweils eine zum Teil weggeschnittene Querschnittsansicht jeweils eines Zahnrads in Form eines Stegrads; Figur 10 zeigt eines nicht erfindungsgemäßen Zahnrads und Figur 11 zeigt das erfindungsgemäße Zahnrad und
- Figur 12: eine zum Teil weggeschnittene Ansicht jeweils eines nicht erfindungsgemäßen Zahnrads in Form eines Stegrads.

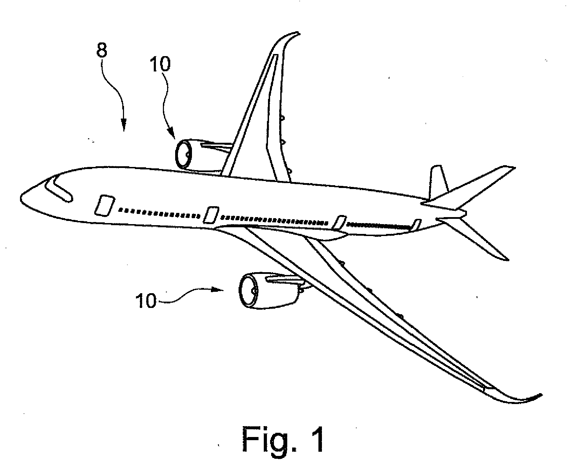

Figur 1 zeigt ein Luftfahrzeug 8 in Form eines Flugzeugs. Das Luftfahrzeug 8 umfasst mehrere Gasturbinentriebwerke 10.

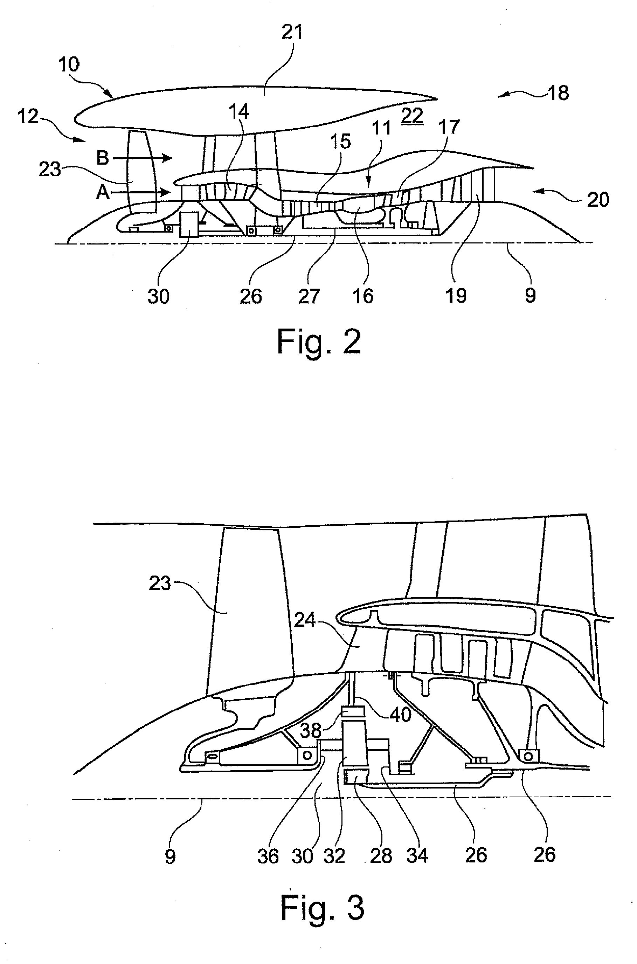

Figur 2 stellt eines der Gasturbinentriebwerke 10 des Luftfahrzeugs 8 mit einer Hauptdrehachse 9 dar. Das Gasturbinentriebwerk 10 umfasst einen Lufteinlass 12 und ein Fan 23, der zwei Luftströme erzeugt: einen Kernluftstrom A und einen Bypassluftstrom B. Das Gasturbinentriebwerk 10 umfasst einen Kern 11, der den Kernluftstrom A aufnimmt. Das Kerntriebwerk 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Der Fan 23 ist über eine Welle 26 und ein epizyklisches Planetengetriebe 30 an der Niederdruckturbine 19 angebracht und wird durch diese angetrieben.

Im Betrieb wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Der Fan 23 stellt allgemein den Hauptteil der Schubkraft bereit. Das epizyklische Planetengetriebe 30 ist ein Untersetzungsgetriebe.

Eine beispielhafte Anordnung für ein Getriebe-Fan-Gasturbinentriebwerk 10 wird in Figur 3 gezeigt. Die Niederdruckturbine 19 (siehe Figur 2) treibt die Welle 26 an, die mit einem Sonnenrad 28 des epizyklischen Planetengetriebes 30 gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 führt die Planetenräder 32 so, dass sie synchron um das Sonnenrad 28 kreisen, während er ermöglicht, dass sich jedes Planetenrad 32 um seine eigene Achse drehen kann. Der Planetenträger 34 ist über Gestänge 36 mit dem Fan 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht den Fan 23 umfassen) und/oder die Turbinen- und Verdichterstufe, die durch die verbindende Welle 26 mit der niedrigsten Drehzahl in dem Triebwerk (d. h. dass sie nicht die Getriebeausgangswelle, die den Fan 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann der Fan 23 als eine erste Verdichtungsstufe oder Verdichtungsstufe mit dem niedrigsten Druck bezeichnet werden.

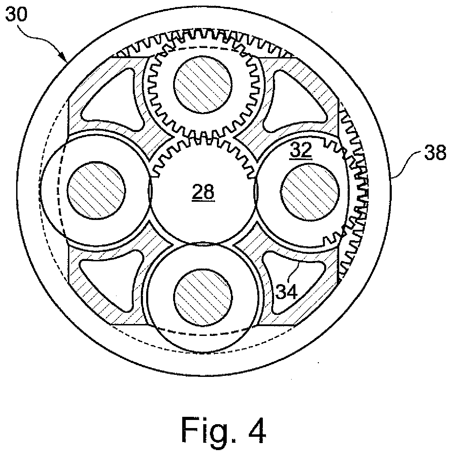

Das epizyklische Planetengetriebe 30 wird in Figur 4 beispielhaft genauer gezeigt. Das Sonnenrad 28, die Planetenräder 32 und das Hohlrad 38 umfassen jeweils Zähne an ihrem Umfang, um ein Kämmen mit den anderen Zahnrädern zu ermöglichen. Jedoch werden der Übersichtlichkeit halber lediglich beispielhafte Abschnitte der Zähne in Figur 4 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines epizyklischen Planetengetriebes 30 umfassen allgemein mindestens drei Planetenräder 32. Das Sonnenrad 28 und/oder die Planetenräder 32 weisen im vorliegenden Beispiel eine Doppelschrägverzahnung auf.

Das in Figur 3 und 4 beispielhaft dargestellte epizyklische Planetengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Planetengetriebe 30 verwendet werden. Als ein weiteres Beispiel kann das Planetengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird der Fan 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 3 und 4 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Gasturbinentriebwerk 10 und/oder zur Verbindung des Getriebes 30 mit dem Gasturbinentriebwerk 10 verwendet werden. Als ein weiteres Beispiel können die Verbindungen (z. B. die Gestänge 36, 40 in dem Beispiel von Figur 3) zwischen dem Getriebe 30 und anderen Teilen des Gasturbinentriebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Gasturbinentriebwerks 10 (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Figur 3 beschränkt. Beispielsweise ist für den Fachmann ohne Weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 3 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder epizyklisch planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 2 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbofantriebwerk bezieht, kann die Offenbarung beispielsweise bei einer beliebigen Art von Gasturbinentriebwerk, wie z. B. bei einem Open-Rotor- (bei dem die Fanstufe nicht von einer Triebwerksgondel umgeben wird) oder einem Turboprop-Triebwerk, angewendet werden.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 2) und eine Umfangsrichtung (senkrecht zu der Ansicht in Figur 2) umfasst. Die axiale, die radiale und die Umfangsrichtung verlaufen senkrecht zueinander.

Nachfolgend werden Ausführungsbeispiele von Zahnrädern für das Getriebe 30 beschrieben.

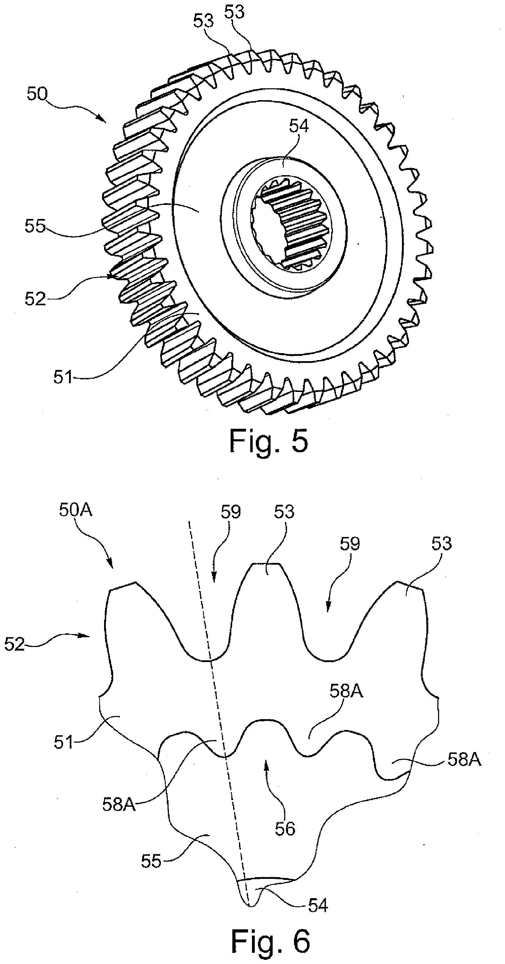

Figur 5 zeigt ein Zahnrad 50 in Form eines Stirnrads. Das Zahnrad 50 umfasst einen Kranz 51, an welchem eine Verzahnung 52 ausgebildet ist. Die Verzahnung 52 kann eine gerade Verzahnung sein oder alternativ auch eine Schrägverzahnung. Ferner kann die Verzahnung 52 eine Doppelschrägverzahnung (mit zwei Helices) sein. Dabei kann jede Helix einen eigenen Steg aufweisen oder beide Helices weisen einen gemeinsamen Steg auf.

Der Kranz 51 weist die Form eines Kreis-Hohlzylinders auf. Der Kranz hat eine Innenseite und eine Außenseite, wobei die Verzahnung 52 an der Außenseite des Kranzes 51 umlaufend ausgebildet ist. Die Verzahnung 52 sitzt auf einem durchgehenden, kreiszylindrischen Abschnitt des Kranzes 51. Die Verzahnung 52 weist eine Vielzahl von Zähnen 53 auf. Die, Zähne 53 sind jeweils massiv und materialeinheitlich ausgebildet. Die Zähne 53 sind konzentrisch um eine Drehachse des Zahnrads 50 herum angeordnet. Bei einer nachfolgenden Bezugnahme auf eine axiale Richtung, eine radiale Richtung oder eine Umfangsrichtung ist, sofern nicht explizit anders angegeben, eine Richtung in Bezug auf die Drehachse des Zahnrads 50 oder auf die entsprechende Drehachse des jeweils beschriebenen Zahnrads gemeint.

Zur drehbaren oder drehfesten Lagerung des Zahnrads 50 umfasst das Zahnrad 50 eine Abstützstelle 54, z.B. in Form einer Nabe. Die Abstützstelle 54 ist koaxial zum Kranz 51 ausgerichtet. Ferner ist die Abstützstelle 54 im Inneren des Kranzes 51 angeordnet. Die Abstützstelle 54 weist hier eine innen umlaufende Formschlusskontur zur drehfesten Anbindung an eine Welle oder Achse auf, wobei auch andere drehfeste Verbindungsarten denkbar sind, z.B. eine Flanschverbindung oder ein aufgeschrumpfter Presssitz, oder eine drehbare Verbindung mit der Achse oder Welle.

Um zwischen der Verzahnung 52 und der Abstützstelle 54 ein Drehmoment übertragen zu können, sind die Verzahnung 52 und die Abstützstelle 54 über einen als Steg 55 bezeichneten Abschnitt fest miteinander verbunden. Der Kranz 51, die Verzahnung 52, der Steg 55 und die Abstützstelle 54 sind einstückig (und materialeinheitlich) ausgebildet. Bei dem Zahnrad 50 handelt es sich um ein Stegrad. Im Gegensatz zu einem Vollrad, bei welchem zwischen einer Verzahnung und einer Abstützstelle in der Regel kein Bereich mit gegenüber der Verzahnung reduzierter Breite (in axialer Richtung betrachtet) vorgesehen ist, weist bei dem Zahnrad 50 der Steg 55 eine (deutlich) geringere Breite auf als die Verzahnung 53. Hierdurch ist es möglich, das Gewicht des Zahnrads 50 im Vergleich zu einem Vollrad deutlich zu reduzieren. Das Zahnrad 50 weist somit zumindest eine seitliche Ausnehmung auf. Der Steg 55 kann zentriert angeordnet sein, sodass auf beiden Seiten eine Ausnehmung ausgebildet ist. Alternativ kann der Steg 55 versetzt zu einer Seite oder ganz an einer Seite angeordnet sein. Im letzten Fall geht der Steg 55 auf der einen Seite des Zahnrads 50 bündig in den Bereich des Kranzes 52 über und das Zahnrad 50 weist nur auf der anderen Seite eine Ausnehmung auf. Der Steg 55 weist im gezeigten Beispiel keine Öffnungen oder dergleichen auf.

Das Zahnrad 50 ist aus einem Stahl und einstückig hergestellt.

Die Zähne von Stegrädern können im Vergleich zu Vollrädern üblicherweise eine geringere Belastbarkeit aufweisen. Dabei kann derselbe Zahn in einem Bereich, unter dem der Steg angeordnet ist, stärker belastbar sein als in einem Bereich, unter dem eine Ausnehmung angeordnet ist. Hierdurch können die Belastbarkeit des Zahnrads und die Optimierbarkeit der Zahnform, insbesondere der Zahnfußkurve, an die jeweilige Anwendung eingeschränkt sein.

Nachfolgend werden mit Bezug auch die Figuren 6 bis 12 mehrere Beispiele von Zahnrädern 50A-50G beschrieben, die jeweils eine verbesserte Belastbarkeit und Optimierbarkeit der Zahnform erlauben. Die jeweilige Grundform dieser nachfolgend beschriebenen Zahnräder 50A-50G entspricht der des vorstehend im Zusammenhang mit Figur 5 beschriebenen Zahnrads 50, sodass nachfolgend nur die jeweiligen Unterschiede dazu beschrieben werden.

Figur. 6 zeigt ein Zahnrad 50A, bei dem an einer der Verzahnung 52 gegenüberliegenden Seite, nämlich der Innenseite 56, des Kranzes 51 (in Umfangsrichtung) eine auf die Zähne 53 der Verzahnung 52 ausgerichtete, räumliche Variation der Geometrie des Zahnrads 58A, hier konkret des Kranzes 51, vorgesehen ist. Der Kranz 51 weist an seiner der Verzahnung 52 abgewandten Seite ein Muster auf, welches auf die Zähne 53 (und Zahnlücken 39) der Verzahnung 52 ausgerichtet ist.

Die Variation der Geometrie ist dabei derart ausgebildet, dass der Radius der inneren Oberfläche des Kranzes 51 im Umfangsrichtung betrachtet variiert. Konkret ist an der Innenseite 56 des Kranzes 51 eine Vielzahl von nach innen (zur Drehachse des Zahnrads 50A hin) vorstehenden Bereichen 58A ausgebildet. Jeder der nach innen vorstehenden Bereiche 58A ist als Vorsprung ausgebildet. Im Beispiel gemäß Figur 6 beschreibt die innere Oberfläche des Kranzes 51 eine Wellenform (alternativ z.B. eine Zick-Zack-Form oder eine andere periodische Form). Die nach innen vorstehenden Bereiche 58A bilden lokale Versteifungen aus.

Das Zahnrad 50A umfasst dieselbe Anzahl an nach innen vorstehender Bereiche 58A wie Zähne 53. Die nach innen vorstehenden Bereiche 58A sind periodisch angeordnet, konkret mit denselben Winkelabständen zueinander wie die Zähne 53. Die nach innen vorstehenden Bereiche 58A (allgemein die periodisch angeordneten Versteifungsbereiche) sind untereinander gleich ausgebildet.

Jeder der nach innen vorstehenden Bereiche 58A weist dieselbe relative Anordnung zu einem jeweils benachbarten Zahn 53 auf, wodurch die Variation der Geometrie des Kranzes 51 an die Zähne 53 der Verzahnung 52 ausgerichtet ist. Durch die Ausrichtung der Variation der Geometrie (und der Oberflächenform) an die Zähne 53 können die Zähne 53 in gleichmäßiger Weise über ihre Breite abgestützt werden. Die nach innen vorstehenden Bereiche 58A verstärken den Kranz 51 jeweils lokal. Je nach dem konkreten Anwendungsfall können die nach innen vorstehenden Bereiche 58A dabei so relativ zu den Zähnen 53 angeordnet werden, dass ein besonders belasteter Bereich von jedem der Zähne 53 selektiv abgestützt wird. Dadurch ist es möglich, das Zahnrad 50A leicht aber dennoch besonders gut belastbar auszubilden. Insbesondere kann die Zahnfußtragfähigkeit optimiert werden. Beispielsweise ist es möglich, eine Zahnfußkurve mit besser ausgenutzten Reserven zu ermöglichen.

Im Beispiel der Figur 6 ist jeder der nach innen vorstehenden Bereiche 58A unterhalb einer Zahnlücke 59 (radial weiter innen) zwischen jeweils zwei benachbarten Zähnen 53 angeordnet. Wie anhand einer gestrichelten Geraden in Figur 6 veranschaulicht, sind die nach innen vorstehenden Bereiche 58A jeweils in direkter Linie entlang des Radius zur Drehachse unterhalb der jeweiligen Zahnlücke 59 angeordnet. Der radial tiefste Punkt jedes radial nach innen vorstehenden Bereichs 58A liegt in direkter Linie radial unterhalb des radial tiefsten Punkts der jeweiligen Zahnlücke 59. Die radial nach innen vorstehenden Berieche 58A sind symmetrisch relativ zu der oder den jeweils nächstgelegenen (hier der darüberliegenden) Zahnlücke(n) 59 angeordnet.

Im Ergebnis kann das Zahnrad 50A eine (lokal) variable Steifigkeit aufweisen, die z.B. für besonders belastete Bereiche erhöht ist. Bei dem Zahnrad 50A handelt es sich um ein Steg-Zahnrad mit (in Umfangsrichtung) variabler Kranzsteifigkeit, das eine optimierte Zahnfußkurve aufweisen kann.

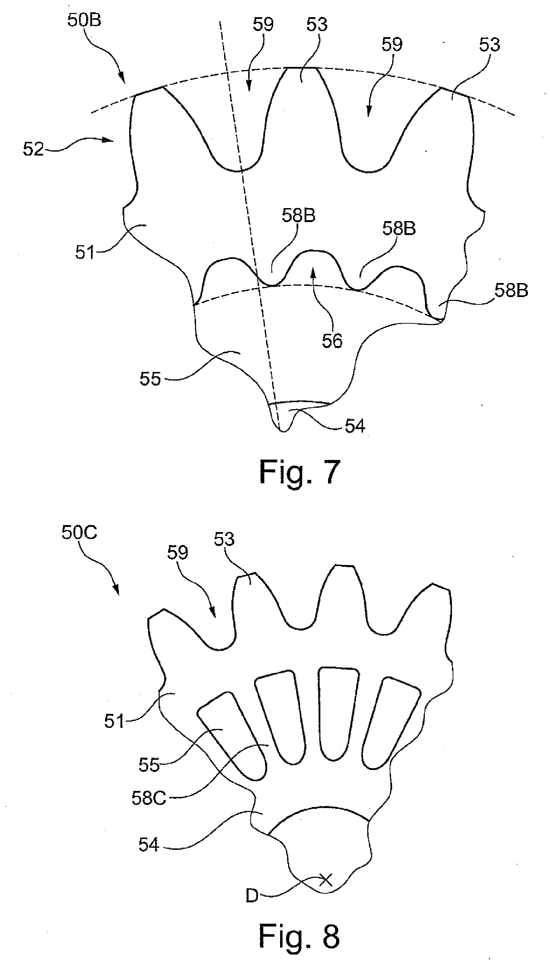

Figur 7 zeigt ein Zahnrad 50B, welches ähnlich wie das Zahnrad 50A gemäß Figur 6 ausgebildet ist, wobei im Unterschied dazu radial nach innen vorstehende Bereiche 58B asymmetrisch zur jeweils darüberliegenden Zahnlücke 59 angeordnet sind (wieder anhand einer gestrichelten Geraden verdeutlicht). Dabei weisen die radial nach innen vorstehenden Bereiche 58A jeweils denselben Winkelversatz in Bezug auf einen jeweils nächstgelegenen Zahn 53 (und entsprechend die jeweils nächstgelegene Zahnlücke 59) auf, sodass die durch die radial nach innen vorstehenden Bereiche 58B gebildete Variation der Geometrie des Kranzes 51 auf die Zähne 53 ausgerichtet ist.

Die Variation der Geometrie des Kranzes 51 kann also symmetrisch oder asymmetrisch auf die Zähne 53 der Verzahnung 52 ausgerichtet sein. Eine asymmetrische Ausrichtung kann insbesondere bei einer asymmetrischen Belastung der Zähne 53 und/oder einer asymmetrischen Zahnform, insbesondere Zahnfußform, gewählt werden.

Optional erstrecken sich die nach innen vorstehenden Bereiche 58B (des Zahnrads 50B gemäß Figur 7 oder des Zahnrads gemäß einer anderen hierin beschriebenen Figur) entsprechend einer Schraubenlinie, z.B. in Bezug auf die Umfangsrichtung und die axiale Richtung. Zum Beispiel ist die Verzahnung 52 eine Schrägverzahnung und jeder der nach innen vorstehenden Bereiche 58B folgt (in axialer Richtung und Umfangsrichtung) jeweils einem der Zähne 53. Diese optionale Ausgestaltung ist in Figur 7 anhand von gestrichelten Linien dargestellt.

Anhand von Figur 8 ist veranschaulicht, dass bei einem Zahnrad 50C radial nach innen vorstehende Bereiche 58C sich bis zur Abstützstelle 54 erstrecken können (alternativ zu einer davon beabstandeten Ausgestaltung). Gemäß Figur 8 verbindet jeder der radial nach innen vorstehenden Bereiche 58C den Kranz 51 mit der Abstützstelle 54, die z.B. als Nabe oder Kragen ausgebildet ist. Die radial nach innen vorstehenden Bereiche 58C sind symmetrisch auf die Zähne 53 der Verzahnung 52 ausgerichtet und vorliegend in Umfangsrichtung betrachtet jeweils mittig zwischen zwei benachbarten Zähnen 53 angeordnet. Die radial nach innen vorstehenden Bereiche 58C gemäß Figur 8 können als Speichen oder als Versteifungsrippen bezeichnet werden. Die Anordnung der Speichen in Umfangsrichtung ist auf die Zähne 53 ausgerichtet, sodass auch die dadurch ausgebildete Variation der Geometrie des Zahnrads 50C auf die Zähne 53 ausgerichtet ist.

Die Bereiche 58C können sich an der Abstützstelle 54 abstützen, sodass das Zahnrad 50C besonders belastbar ausgebildet werden kann.

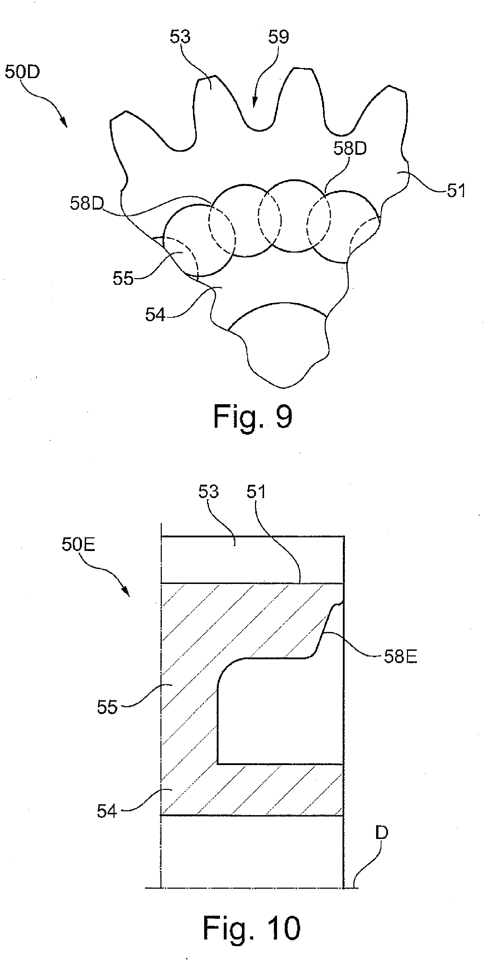

Figur 9 zeigt ein Zahnrad 50D, das ähnlich wie das Zahnrad 50A gemäß Figur 6 ausgebildet ist. Radial nach innen vorstehende Bereiche 58D sind symmetrisch jeweils unterhalb einer Zahnlücke 59 angeordnet.

Die nach innen vorstehenden Bereiche 58D sind vorliegend durch Einbringen von Frästaschen oder Bohrungen in ein Vollrad ausgebildet, was in Figur 9 durch gestrichelte Linien veranschaulicht ist. Das ermöglicht eine einfache Herstellung des Zahnrades 50D aus einem Vollrad.

Bei einem entsprechenden Herstellungsverfahren wird zunächst ein Vollrad bereitgestellt, in welches dann von einer Seite (alternativ von zwei gegenüberliegenden Seiten jeweils) beispielsweise mehrere Frästaschen und/oder Bohrungen, z.B. in Form von Sacklöchern, eingebracht werden. Es wird Material in einem Muster weggenommen, welches auf die Zähne 53 der Verzahnung 52 ausgerichtet ist. Beispielsweise wird jeweils unterhalb eines Zahns 53 eine Frästasche/Bohrung eingebracht. Für jeden Zahn 53 wird (an einer Seite oder an beiden Seiten des Zahnrads 50D) jeweils eine Frästasche/Bohrung eingebracht oder allgemein lokal Material weggenommen. Jede der Frästaschen/Bohrungen weist die gleiche Positionierung relativ zum entsprechenden Zahn 53 auf.

Die Bohrungen/Frästaschen weisen jeweils einen kreisförmigen Querschnitt auf. Die Bohrungen/Frästaschen überlappen einander. Durch die jeweils zwei überlappenden Bohrungen/Frästaschen ergibt sich für die nach innen vorstehenden Bereiche 58D eine spitz zulaufende Form, was aber auch durch andere Herstellungsverfahren möglich ist, z.B. durch Gießen des Zahnrades in einer entsprechenden Gussform. Die nach innen vorstehenden Bereiche 58D des Zahnrads 50D gemäß Figur 9 weisen zwei konkave Flanken auf. Alternativ sind die Bohrungen/Frästaschen voneinander beabstandet, was zu speichenförmigen Bereichen ähnlich Figur 8 führen kann.

An der Abstützstelle 54 wird dadurch ein entsprechendes Muster mit radial nach außen vorstehenden Vorsprüngen ausgebildet. Optional wird die Abstützstelle 54 danach am Außenumfang bearbeitet, z.B. mittels einer Drehmaschine, um eine kreiszylindrische äußere Mantelfläche aufzuweisen und weiteres Material einzusparen.

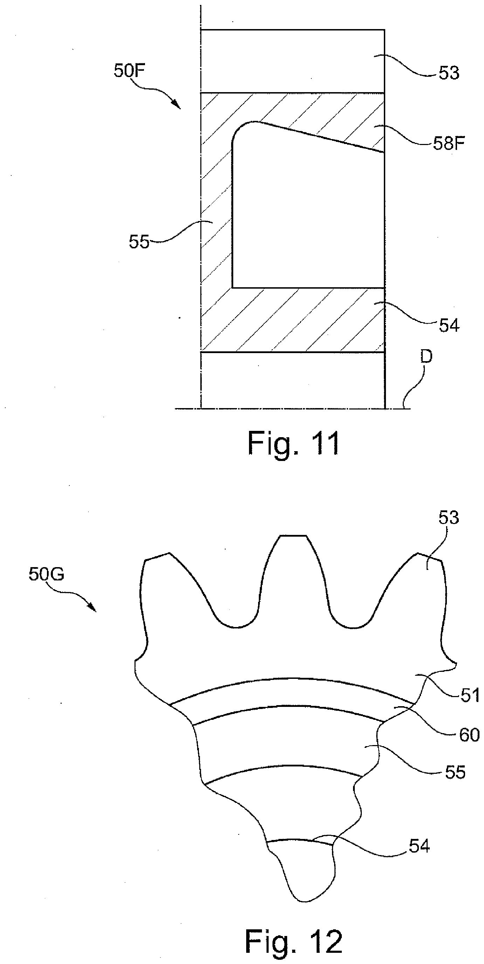

Zusätzlich zu den optionalen Variationen der Geometrie in Umfangsrichtung gemäß den Figuren 6 bis 9 ist erfindungsgemäß vorgesehen, dass an einem Zahnrad eine Variation der Geometrie in axialer Richtung ausgebildet ist. Zwei Beispiele hierfür zeigen die Figuren 10 und 11. Beide Figuren 10 und 11 zeigen jeweils ein Zahnrad 50E, 50F mit einem Kranz 51, der an seiner der Verzahnung 52 gegenüberliegenden Seite, hier der Innenseite, einen Bereich 58E, 58F aufweist, welcher in Bezug auf die Drehachse D in axialer Richtung einen variierenden Radius aufweist, also an unterschiedlichen Stellen in axialer Richtung einen unterschiedlichen Radius aufweist. Optional weist eines der Zahnräder 50A-50D gemäß den Figuren 6 bis 9 einen Querschnitt gemäß Figur 10 oder 11 auf, insbesondere an einem der nach innen vorstehenden Bereiche 58A-58D.

Figur 10 zeigt dabei das Zahnrad 50E, bei dem der Radius ausgehend vom Steg 55 zunächst eine (optionale) Rundung beschreibt, dann (ebenfalls optional) über eine Strecke konstant bleibt und sich dann unter Bildung einer Rundung (mit gegenüber der zuerst genannten Rundung entgegengesetzten Krümmungsrichtung) erweitert. An oder nahe der äußeren Seitenfläche weist der Kranz 51 den größten Radius auf. Der Kranz 51 ist insbesondere benachbart zum Steg 55 verstärkt. Hierdurch kann eine Verformung des Kranzes 51 relativ zum Steg 55 besonders gut verhindert werden.

Figur 11 zeigt das Zahnrad 50F, bei dem der Radius in axialer Richtung ausgehend vom Steg 55 zunächst eine (optionale) Rundung beschreibt und dann stetig kleiner wird. Hierdurch können insbesondere äußere Zahnbereiche besonders stark abgestützt werden.

Die Variation der Geometrie in Umfangsrichtung (siehe insbesondere Figuren 6 bis 9) kann wie bereits erwähnt mit der Variation der Geometrie in axialer Richtung kombiniert werden. Dabei können die radial nach innen vorstehenden Bereiche 58A-58D und/oder die dazwischenliegenden Bereiche in axialer Richtung einen veränderlichen Radius aufweisen.

Die Zahnräder 50E, 50F gemäß Figur 10 und Figur 11 können so ausgebildet sein, wie in den Figuren 10 und 11 dargestellt, wobei der Steg 55 an einer Seite des jeweiligen Zahnrades 50E, 50F angeordnet ist. Alternativ ist es z.B. möglich, die Zahnräder 50E, 50F jeweils so auszubilden, dass der Steg 55 mittig angeordnet ist und das jeweilige Zahnrad 50E, 50F eine zweite Hälfte umfasst, die einer Spiegelung der in den Figuren 10 und 11 gezeigten Hälften entsprechen.

Figur 12 zeigt ein Zahnrad 50G, welches gemäß Figur 5 ausgebildet ist und zusätzlich an einer der Verzahnung 52 gegenüberliegenden Seite 56 des Kranzes 51 eine Variation des Materials aufweist, um eine Erhöhung einer Steifigkeit des Kranzes 51 zu erzielen.

Hierzu ist in den Kranz 51 ein Ring 60 aus einem Material mit einer im Vergleich zum Material des Kranzes 51 höheren spezifischen Steifigkeit eingesetzt (optional mindestens 5% höher, insbesondere mindestens 10% höher oder mindestens 15% höher), konkret aus einem kohlenstofffaserverstärkten Kunststoff, kurz CFK. Alternativ oder zusätzlich kann ein (im Vergleich zum Material des Kranzes 51) festerer undloder steiferer Stahl für den Ring 60 verwendet werden und/oder Keramik. Vorliegend weist der Ring 60 die Form eines Kreis-Hohlzylinders auf. Ferner kann für den Ring 60 auch ein Material mit einer im Vergleich zum Material des Kranzes 51 ähnlichen spezifischen Steifigkeit eingesetzt werden, und zwar beispielsweise mit einer spezifischen Steifigkeit in der Höhe der spezifischen Steifigkeit des Materials des Kranzes 51 +/-15%, insbesondere +/- 10%, insbesondere +/- 5%. Beispielsweise handelt es sich bei dem Material des Rings 60 (allgemein des an der der Verzahnung 52 gegenüberliegenden Seite des Kranzes 51 vorgesehenen Material) um eine Titanlegierung mit einer spezifischen Steifigkeit von mindestens 85%, insbesondere mindestens 90%, insbesondere mindestens 95% der spezifschen Steifigkeit des Materials des Kranzes, wobei das Material des Kranzes z.B. ein Stahl ist.

Beispielsweise handelt es sich bei dem Material des Rings 60 (allgemein des an der der Verzahnung 52 gegenüberliegenden Seite des Kranzes 51 vorgesehenen Material) um eine Titan-Legierung (insbesondere mit einer spezifischen Steifigkeit von ca. 23e6 m²/s²), um CFK (insbesondere mit einer spezifischen Steifigkeit von ca. 93e6 m²/s²) oder um eine Keramik, z.B. Siliziumnitrid (insbesondere mit einer spezifischen Steifigkeit von ca. 93e6 m²/s²), Siliziumcarbid (insbesondere mit einer spezifischen Steifigkeit von ca. 131e6 m²/s²) oder Aluminiumoxid (insbesondere mit einer spezifischen Steifigkeit von ca. 76e6 m²/s²).

Um das (übrige) Zahnrad 50G mit dem Ring 60 (im Allgemeinen einem Versteifungselement) zu verbinden, kommen z.B. form-, kraft- und stoffschlüssige Verfahren in Frage, insbesondere Pressverbände und/oder Klebeverbindungen.

Zwischen dem Ring 60 und der Abstützstelle 54 ist ein Abstand und eine Aussparung ausgebildet.

Alternativ ist denkbar, eines der Zahnräder 50A-50F der Figuren 6 bis 11 mit einem Ring 60 zu versehen, wobei z.B. eine Außenkontur des Rings 60 so ausgebildet ist, dass sie passend mit der jeweiligen Innenkontur (mit den nach innen vorstehenden Bereichen) in Eingriff steht. Gemäß einer weiteren Alternative ist die innere Oberfläche (allgemein die der Verzahnung 52 abgewandte Seite) des Rings 60 nicht kreiszylindrisch, sondern mit einer auf die Zähne 53 der Verzahnung 52 ausgerichteten Variation der Geometrie ausgebildet, beispielsweise entsprechend einer der Figuren 6 bis 11.

Jedes der Zahnräder 50A-50G kann in dem Getriebe 30 des Gasturbinentriebwerks 10 eingesetzt sein oder werden, z.B. als Sonnenrad 28 oder Planetenrad 32. Ferner ist es möglich, das Hohlrad 38 entsprechend auszubilden, wobei hier die Abstützstelle außen liegt und die Verzahnung innen. Da das Getriebe 30 sehr große Drehmomente überträgt, werden die Zahnräder des Getriebes 30 vergleichsweise groß ausgeführt. Daher kommt diesen Zahnrädern eine Gewichtsersparnis besonders zugute.

Es versteht sich, dass die Erfindung nicht auf die oben beschriebenen Ausführungsformen beschränkt ist, sondern allein durch die nachfolgenden Ansprüche.

### Bezugszeichenliste

- 9: Hauptdrehachse
- 10: Gasturbinentriebwerk
- 11: Kerntriebwerk
- 12: Lufteinlass
- 14: Niederdruckverdichter
- 15: Hochdruckverdichter
- 16: Verbrennungseinrichtung
- 17: Hochdruckturbine
- 18: Bypassschubdüse
- 19: Niederdruckturbine
- 20: Kernschubdüse
- 21: Triebwerksgondel
- 22: Bypasskanal
- 23: Fan
- 24: stationäre Stützstruktur
- 26: Welle
- 27: Verbindungswelle
- 28: Sonnenrad
- 30: Getriebe
- 32: Planetenräder
- 34: Planetenträger
- 36: Gestänge
- 38: Hohlrad
- 40: Gestänge
- 50, 50A-50G: Zahnrad
- 51: Kranz
- 52: Verzahnung
- 53: Zahn
- 54: Abstützstelle
- 55: Steg
- 56: Innenseite
- 58A-58F: Bereich
- 59: Zahnlücke
- 60: Ring
- A: Kernluftstrom
- B: Bypassluftstrom
- D: Drehachse

## Patentansprüche

1. Zahnrad (50A-50F) für ein Getriebe (30), umfassend:
- einen Kranz (51), an dem eine Verzahnung (52) mit einer Vielzahl von Zähnen (53) vorgesehen ist,
- eine Abstützstelle (54) und
- einen Steg (55), über den der Kranz (51) mit der Abstützstelle (54) verbunden ist,
wobei an einer der Verzahnung (52) gegenüberliegenden Seite (56) des Kranzes (51) neben dem Steg (55) eine an die Zähne (53) der Verzahnung (52) ausgerichtete, periodische Variation der Geometrie ausgebildet ist,
**dadurch gekennzeichnet, dass**
das Zahnrad (50A-50F) eine Drehachse (D) aufweist und ein Radius bezüglich der Drehachse (D) zu einer inneren Oberfläche des Kranzes (51) in axialer Richtung bezüglich der Drehachse (D) variiert, derart, dass der Radius in axialer Richtung ausgehend vom Steg (55) stetig kleiner wird.

2. Zahnrad (50A-50F) nach Anspruch 1, wobei der Radius bezüglich der Drehachse (D) zu einer inneren Oberfläche des Kranzes (51) in Umfangsrichtung um die Drehachse (D) variiert.

3. Zahnrad (50A-50F) nach Anspruch 1 oder 2, wobei der Radius ausgehend vom Steg zunächst eine optionale Rundung beschreibt und dann stetig kleiner wird.

4. Zahnrad (50A-50F) nach einem der vorhergehenden Ansprüche, wobei der Kranz (51) links und rechts des Stegs (55) jeweils eine Kranzgeometrie aufweist, wobei die Kranzgeometrien unterschiedlich ausgebildet sind.

5. Zahnrad (50A-50F) nach einem der vorhergehenden Ansprüche, wobei zur Bildung der Variation der Geometrie eine Anzahl periodisch angeordneter und nach innen vorstehender Bereiche (58A-58F) ausgebildet ist, wobei die Anzahl gleich der Anzahl an Zähnen (53) der Verzahnung (52) ist.

6. Zahnrad (50A-50F) nach einem der vorhergehenden Ansprüche, wobei zur Bildung der Variation der Geometrie jeweils unter einer Zahnlücke (59) zwischen zwei benachbarten Zähnen (53) ein vom Kranz (51) nach innen vorstehender Bereich (58A-58F) ausgebildet ist.

7. Zahnrad (50A-50F) nach Anspruch 6, wobei jeweils zwei benachbarte, nach innen vorstehende Bereiche (58A-58F) denselben Winkelabstand zueinander aufweisen wie die beiden darüberliegenden Zahnlücken (59).

8. Zahnrad (50A-50F) nach einem der vorhergehenden Ansprüche, wobei das Zahnrad (50A-50F) einstückig ausgebildet ist.

9. Zahnrad (50A-50G) nach einem der vorhergehenden Ansprüche, für ein Getriebe (30) zum Antrieb eines Fans (23) eines Gasturbinentriebwerks (10) mit einer niedrigeren Drehzahl als eine Kernwelle (26) des Gasturbinentriebwerks (10).

10. Getriebe (30) zum Antrieb des Fans (23) des Gasturbinentriebwerks (10) mit einer niedrigeren Drehzahl als die Kernwelle (26) des Gasturbinentriebwerks (10), wobei das Getriebe (30) ein Zahnrad (50A-50G) nach dem Anspruch 9 1 umfasst.

11. Gasturbinentriebwerk (10) für ein Luftfahrzeug, das Folgendes umfasst:
- ein Kerntriebwerk (11), das eine Turbine (19), einen Verdichter (14) und die die Turbine mit dem Verdichter verbindende Kernwelle (26) umfasst;
- den Fan (23), der stromaufwärts des Kerntriebwerks (11) positioniert ist, wobei der Fan (23) mehrere Fanschaufeln umfasst; und
- das Getriebe (30), das von der Kernwelle (26) antreibbar ist, wobei der Fan (23) mittels des Getriebes (30) mit einer niedrigeren Drehzahl als die Kernwelle (26) antreibbar ist, wobei das Getriebe nach Anspruch 10 ausgebildet ist.

12. Gasturbinentriebwerk (10) nach Anspruch 11, wobei:
- die Turbine eine erste Turbine (19) ist, der Verdichter ein erster Verdichter (14) ist und die Kernwelle eine erste Kernwelle (26) ist;
- das Kerntriebwerk (11) ferner eine zweite Turbine (17), einen zweiten Verdichter (15) und eine zweite Kernwelle (27), die die zweite Turbine mit dem zweiten Verdichter verbindet, umfasst; und
- die zweite Turbine, der zweite Verdichter und die zweite Kernwelle dahingehend angeordnet sind, sich mit einer höheren Drehzahl als die erste Kernwelle zu drehen.

## Claims

1. Toothed gear (50A-50F) for a gear box (30), comprising:
- a rim (51) on which a toothing (52) with a multiplicity of teeth (53) is provided,
- a support point (54), and
- a web (55) via which the rim (51) is connected to the support point (54),
wherein, at a side (56) of the rim (51) that is situated opposite the toothing (52) and adjacent to the web (55), a periodic geometry variation aligned with the teeth (53) of the toothing (52) is formed,
**characterized in that**
the toothed gear (50A-50F) has an axis of rotation (D), and a radius relative to the axis of rotation (D) to an inner surface of the rim (51) varies in an axial direction relative to the axis of rotation (D) in such a way that, in an axial direction proceeding from the web (55), the radius becomes continuously smaller.

2. Toothed gear (50A-50F) according to Claim 1, wherein the radius relative to the axis of rotation (D) to an inner surface of the rim (51) varies in a circumferential direction about the axis of rotation (D) .

3. Toothed gear (50A-50F) according to Claim 1 or 2, wherein, proceeding from the web, the radius firstly describes an optional rounding and then becomes continuously smaller.

4. Toothed gear (50A-50F) according to one of the preceding claims, wherein the rim (51) has a respective rim geometry to the left and to the right of the web (55), wherein the rim geometries are of different design.

5. Toothed gear (50A-50F) according to one of the preceding claims, wherein, to form the geometry variation, a number of periodically arranged and inwardly projecting regions (58A-58F) are formed, wherein the number is equal to the number of teeth (53) of the toothing (52).

6. Toothed gear (50A-50F) according to one of the preceding claims, wherein, to form the geometry variation, a region (58A-58F) projecting inwards from the rim (51) is formed in each case under a tooth space (59) between two adjacent teeth (53).

7. Toothed gear (50A-50F) according to Claim 6, wherein in each case two adjacent inwardly projecting regions (58A-58F) have the same angular spacing to one another as the two tooth spaces (59) situated thereabove.

8. Toothed gear (50A-50F) according to one of the preceding claims, wherein the toothed gear (50A-50F) is formed as a single piece.

9. Toothed gear (50A-50G) according to one of the preceding claims for a gear box (30) for driving a fan (23) of a gas turbine engine (10) at a lower rotational speed than a core shaft (26) of the gas turbine engine (10).

10. Gear box (30) for driving a fan (23) of the gas turbine engine (10) at a lower rotational speed than the core shaft (26) of the gas turbine engine (10), wherein the gear box (30) comprises a toothed gear (50A-50G) according to Claim 9.

11. Gas turbine engine (10) for an aircraft, comprising the following:
- a core engine (11) which comprises a turbine (19), a compressor (14), and the core shaft (26) connecting the turbine to the compressor;
- the fan (23) which is positioned upstream of the core engine (11), wherein the fan (23) comprises a multiple fan blades; and
- the gear box (30) which is able to be driven by the core shaft (26), wherein the fan (23) is able to be driven by means of the gear box (30) at a lower rotational speed than the core shaft (26), wherein the gear box is designed according to Claim 10.

12. Gas turbine engine (10) according to Claim 11, wherein:
- the turbine is a first turbine (19), the compressor is a first compressor (14), and the core shaft is a first core shaft (26);
- the core engine (11) further comprises a second turbine (17), a second compressor (15), and a second core shaft (27) which connects the second turbine to the second compressor; and
- the second turbine, the second compressor, and the second core shaft are arranged to rotate at a higher rotational speed than the first core shaft.

## Revendications

1. Roue dentée (50A-50F) pour une transmission (30), comprenant :
- une couronne (51), sur laquelle est prévue une denture (52) avec une pluralité de dents (53),
- un point d'appui (54) et
- une entretoise (55), par l'intermédiaire de laquelle la couronne (51) est reliée au point d'appui (54),
une variation périodique de la géométrie, alignée sur les dents (53) de la denture (52), étant formée sur un côté (56) de la couronne (51) opposé à la denture (52), à côté de l'entretoise (55),
**caractérisée en ce que**
la roue dentée (50A-50F) présente un axe de rotation (D) et un rayon par rapport à l'axe de rotation (D) varie vers une surface intérieure de la couronne (51) dans la direction axiale par rapport à l'axe de rotation (D), de telle sorte que le rayon diminue de manière continue dans la direction axiale en partant de l'entretoise (55).

2. Roue dentée (50A-50F) selon la revendication 1, dans laquelle le rayon par rapport à l'axe de rotation varie (D) vers une surface intérieure de la couronne (51) dans la direction circonférentielle autour de l'axe de rotation (D).

3. Roue dentée (50A-50F) selon la revendication 1 ou 2, dans laquelle le rayon décrit d'abord un arrondi facultatif à partir de l'entretoise et diminue ensuite de manière continue.

4. Roue dentée (50A-50F) selon l'une quelconque des revendications précédentes, dans laquelle la couronne (51) présente une géométrie de couronne à gauche et à droite de l'entretoise (55), les géométries de couronne étant formées de manière différente.

5. Roue dentée (50A-50F) selon l'une quelconque des revendications précédentes, dans laquelle un nombre de zones (58A-58F) agencées de manière périodique et faisant saillie vers l'intérieur sont formées pour former la variation de la géométrie, le nombre étant égal au nombre de dents (53) de la denture (52).

6. Roue dentée (50A-50F) selon l'une quelconque des revendications précédentes, dans laquelle, pour former la variation de la géométrie, une zone (58A-58F) faisant saillie vers l'intérieur par rapport à la couronne (51) est formée respectivement sous un entredent (59) entre deux dents voisines (53).

7. Roue dentée (50A-50F) selon la revendication 6, dans laquelle deux zones voisines (58A-58F) faisant saillie vers l'intérieur présentent la même distance angulaire l'une de l'autre que les deux entredents (59) situés au-dessus.

8. Roue dentée (50A-50F) selon l'une quelconque des revendications précédentes, dans laquelle la roue dentée (50A-50F) est formée d'une seule pièce.

9. Roue dentée (50A-50G) selon l'une quelconque des revendications précédentes, pour une transmission (30) pour entraîner une soufflante (23) d'un moteur à turbine à gaz (10) à une vitesse de rotation inférieure à celle d'un arbre central (26) du moteur à turbine à gaz (10).

10. Transmission (30) pour entraîner la soufflante (23) du moteur à turbine à gaz (10) à une vitesse de rotation inférieure à celle d'un arbre central (26) du moteur à turbine à gaz (10), la transmission (30) comprenant une roue dentée (50A-50G) selon la revendication 9.

11. Moteur à turbine à gaz (10) pour un aéronef, comprenant les éléments suivants :
- un moteur central (11), qui comprend une turbine (19), un compresseur (14) et l'arbre central (26) reliant la turbine au compresseur ;
- la soufflante (23), qui est positionnée en amont du moteur central (11), la soufflante (23) comprenant plusieurs aubes de soufflante ; et
- la transmission (30), qui peut être entraînée par l'arbre central (26), la soufflante (23) pouvant être entraînée au moyen de la transmission (30) à une vitesse de rotation inférieure à celle de l'arbre central (26), la transmission étant formée selon la revendication 10.

12. Moteur à turbine à gaz (10) selon la revendication 11, dans lequel :
- la turbine est une première turbine (19), le compresseur est un premier compresseur (14) et l'arbre central est un premier arbre central (26) ;
- le moteur central (11) comprend en outre une deuxième turbine (17), un deuxième compresseur (15) et un deuxième arbre central (27), qui relie la deuxième turbine au deuxième compresseur ; et
- la deuxième turbine, le deuxième compresseur et le deuxième arbre central sont agencés pour tourner à une vitesse de rotation supérieure à celle de l'arbre central.
